(19) Europäisches Patentamt

European Patent Office

Office européen des brevets

(11) EP 1 588 124 B1

(12) FASCICULE DE BREVET EUROPEEN

(45) Date de publication et mention
de la délivrance du brevet:
**11.11.2009 Bulletin 2009/46**

(21) Numéro de dépôt: **04706716.0**

(22) Date de dépôt: **30.01.2004**

(51) Int Cl.:
***G01B 11/16*** *(2006.01)*

(86) Numéro de dépôt international:
**PCT/FR2004/050036**

(87) Numéro de publication internationale:
**WO 2004/070314 (19.08.2004 Gazette 2004/34)**

(54) **EXTENSOMETRE A CORPS D'EPREUVE FLEXIBLE ET RESEAUX DE BRAGG**

EXTENSOMETER MIT EINEM FLEXIBLEN MESSELEMENT UND BRAGGGITTERN

EXTENSOMETER COMPRISING A FLEXIBLE SENSING ELEMENT AND BRAGG GRATINGS

(84) Etats contractants désignés:
**AT BE BG CH CY CZ DE DK EE ES FI FR GB GR
HU IE IT LI LU MC NL PT RO SE SI SK TR**

(30) Priorité: **31.01.2003 FR 0301126**

(43) Date de publication de la demande:
**26.10.2005 Bulletin 2005/43**

(73) Titulaire: **COMMISSARIAT A L'ENERGIE
ATOMIQUE
75015 Paris (FR)**

(72) Inventeurs:
• **ROUGEAULT, Stéphane
F-92330 SCEAUX (FR)**
• **FERDINAND, Pierre
F-78800 HOUILLES (FR)**

(74) Mandataire: **Poulin, Gérard et al
Brevalex
3, rue du Docteur Lancereaux
75008 Paris (FR)**

(56) Documents cités:
**DE-A- 19 922 102      FR-A- 2 823 299
US-A1- 2003 012 499**

## Description

### DOMAINE TECHNIQUE

La présente invention concerne un extensomètre utilisant au moins un réseau de Bragg (« Bragg grating »), qui est formé dans le coeur (« core ») d'une fibre optique, et au moins un corps d'épreuve dont le réseau de Bragg est rendu solidaire.

L'extensomètre objet de l'invention trouve notamment des applications dans les domaines du génie civil, des travaux publics et de la géotechnique.

Il est plus particulièrement destiné à mesurer des déformations et des déplacements qui sont importants, de l'ordre de quelques millimètres,.et peuvent se produire, par exemple, dans des terrains ou des structures en béton.

L'invention permet, en particulier, la détection et le suivi de fissures qui sont susceptibles d'apparaître dans de telles structures.

### ÉTAT DE LA TECHNIQUE ANTÉRIEURE

On rappelle tout d'abord qu'un système de mesure de déformations, utilisant un ou plusieurs réseaux de Bragg de mesure, peut comprendre une source optique à large spectre, allant par exemple de 1225nm à 1325nm ou de 1530nm à 1570nm, et un système d'analyse spectrale, permettant de localiser des raies de Bragg et de référencer celles-ci par rapport à un ou plusieurs réseaux de Bragg de référence.

Ce système d'analyse spectrale et la source optique sont optiquement couplés, par exemple au moyen d'un coupleur optique 50/50, à la fibre optique comportant chaque réseau de Bragg de mesure et à la fibre optique comportant chaque réseau de Bragg de référence.

De plus, on connaît déjà divers extensomètres utilisant des réseaux de Bragg.

On se reportera en particulier aux documents suivants :

[1] Demande internationale PCT/FR00/00806 du 30 mars 2000, M. Bugaud et al.
[2] FR 2 823 299, V. Dewynter-Marty et al.

L'extensomètre décrit dans le document [1] utilise un corps d'épreuve en matériau composite qui est co-extrudé avec une fibre optique contenant un réseau de Bragg.

Cet extensomètre convient à la surveillance de structures faites de béton, matériau dont le domaine d'élasticité va de $-2500\mu\varepsilon$ à $+250\mu\varepsilon$. On rappelle à ce propos que $1\mu\varepsilon$ correspond à $1\mu m/m$ c'est-à-dire à $10^{-6}$.

Cependant, cet extensomètre est difficilement utilisable lorsque la base de mesure dépasse un mètre à cause de problèmes de flambage (« buckling ») pour des mesures en compression.

L'extensomètre décrit dans le document [2] remédie à cet inconvénient. Dans cet extensomètre, la fibre optique, contenant le réseau de Bragg, est placée dans un tube, qui sert de corps d'épreuve, et tendue entre les deux extrémités de ce tube.

Cet extensomètre convient aussi à la surveillance de structures en béton, mais son domaine de fonctionnement est limité par le domaine d'élasticité de la fibre optique et s'étend seulement de $-5000\mu\varepsilon$ à $+5000\mu\varepsilon$.

De ce fait, cet extensomètre ne permet pas de mesurer de grandes déformations, du genre de celles que l'on observe dans une structure en béton qui se fissure.

Pour remédier à cet inconvénient et pouvoir mesurer des déformations ou des déplacements de l'ordre de quelques millimètres, on a conçu un extensomètre à réseau de Bragg, comportant une partie fixe, une partie mobile, apte à coulisser dans la partie fixe, et un système à ressorts, permettant de démultiplier le déplacement à mesurer et donc l'allongement subi par la fibre optique dans laquelle est formé le réseau de Bragg.

À ce sujet, on se reportera au document suivant :

[3] P. Ferdinand et al., Mine Operating Accurate STABILity Control with Optical Fiber sensing and Bragg Grating Technology : the BRITE STABILOS project, OSF10, Glasgow (GB), 11-13 octobre 1994, et Journal of Lightwave Technology, vol.12, n°7, juillet 1995.

Cependant, cet extensomètre présente quelques défauts de linéarité, dus aux faibles coefficients de raideur des ressorts utilisés, ainsi qu'un manque de stabilité, dû à des frottements de la partie mobile dans la partie fixe.

### EXPOSÉ DE L'INVENTION

La présente invention a pour but de remédier aux inconvénients précédents, en proposant un extensomètre ayant une plus grande dynamique de mesure que les extensomètres à fibre optique et réseau de Bragg, collés sur un corps d'épreuve qui est directement soumis à la grandeur à mesurer ou tendu entre deux points. Cet extensomètre présente en outre une meilleure linéarité de mesure que l'extensomètre à ressorts connu, mentionné plus haut.

L'extensomètre objet de l'invention permet de démultiplier mécaniquement un déplacement à mesurer de manière à rester dans le domaine d'utilisation de la fibre optique ou des fibres optiques qu'il comporte.

En outre, dans des modes de réalisation préférés, il permet de compenser les effets de la température et se monte de façon simple et reproductible, ce qui évite un étalonnage systématique du ou des capteurs (« sensors ») c'est-à-dire du ou des réseaux de Bragg que comporte cet extensomètre.

DE 19922102 A décrit un capteur à réseau de Bragg sur fibre pour détecter des grandeurs physiques. US 2003/0012499 A décrit un dispositif d'accord optique, à réseau de Bragg sur fibre. FR 2 823 299 A décrit un extensomètre à longue base, à fibre optique tendue et réseau de Bragg.

De façon précise, la présente invention a pour objet un extensomètre destiné à mesurer les déformations d'un matériau hôte, conformément à la revendication 1.

Selon un mode de réalisation préféré de l'extensomètre objet de l'invention, cet extensomètre est conforme à la revendication 2.

Selon un mode de réalisation préféré de l'invention, le corps d'épreuve est une lame flexible qui travaille dans son domaine linéaire d'élasticité et sur laquelle est collée, dans le plan où s'exerce la flexion, la fibre comportant le réseau de Bragg, ce collage étant homogène de manière à minimiser les irrégularités induites sur la courbure de la lame.

La flexion induit sur le réseau de Bragg une micro-déformation qui est proportionnelle à la grandeur à mesurer, le coefficient de proportionnalité dépendant du rayon de courbure de la lame flexible à l'endroit où est implanté le réseau de Bragg.

Il est avantageux de rendre ce coefficient de proportionnalité indépendant de la localisation du réseau de Bragg dans le plan où s'exerce la flexion, c'est-à-dire indépendante de l'abscisse curviligne de ce réseau de Bragg, de manière à maîtriser la courbe de réponse du capteur que constitue l'extensomètre, à éviter un gradient de déformation du réseau de Bragg, qui provoquerait une déformation spectrale ("chirp") de ce dernier, ou encore à pouvoir associer un second réseau de Bragg au précédent, en vue d'une correction thermique. Pour cela, il est nécessaire que la lame flexible soit isocontrainte en flexion, ce qui correspond à un mode préférentiel de réalisation de l'invention.

Parmi les lames isocontraintes, la plus simple à réaliser a une épaisseur constante et une forme de triangle isocèle, ce qui constitue un mode préférentiel de réalisation de la lame.

L'extensomètre objet de l'invention comprend de préférence deux corps d'épreuve respectivement constitués de première et deuxième lames flexibles, ces lames flexibles étant placées l'une en face de l'autre et prévues pour être simultanément fléchies lors d'une déformation du matériau hôte.

L'extensomètre objet de l'invention comprend de préférence un autre réseau de Bragg, fixé sur l'autre face de la lame flexible, à un endroit de même courbure, et prévu pour la compensation d'effets thermiques, susceptibles d'affecter ledit réseau de Bragg, ce dernier et ledit autre réseau ayant des longueurs d'onde de Bragg différentes.

De préférence, lorsque l'extensomètre comprend les deux lames flexibles, il comprend en outre deux réseaux de Bragg dont les longueurs d'onde de Bragg respectives sont différentes, l'un des réseaux de Bragg étant fixé sur une face de la première lame flexible, face qui est rendue concave par la flexion, l'autre réseau de Bragg étant fixé sur une face de la deuxième lame flexible, face qui est rendue convexe par la flexion.

Si l'on utilise la variante selon laquelle la lame de flexion est isocontrainte, les deux réseaux de Bragg ne sont pas nécessairement en regard l'un de l'autre sur les deux faces de la lame. En revanche, si l'on n'utilise pas cette variante, il importe que les deux réseaux de Bragg soient en regard l'un de l'autre sur les deux faces de la lame.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue de côté schématique d'un extensomètre conforme à l'invention,
- la figure 2 illustre schématiquement le principe de cet extensomètre,
- la figure 3 est une vue en coupe de dessus schématique d'un mode de réalisation particulier de l'extensomètre objet de l'invention, et
- la figure 4 est une vue en coupe de côté schématique de ce mode de réalisation particulier de l'extensomètre.

**EXPOSÉ DÉTAILLÉ DE MODES DE RÉALISATION PARTICULIERS**

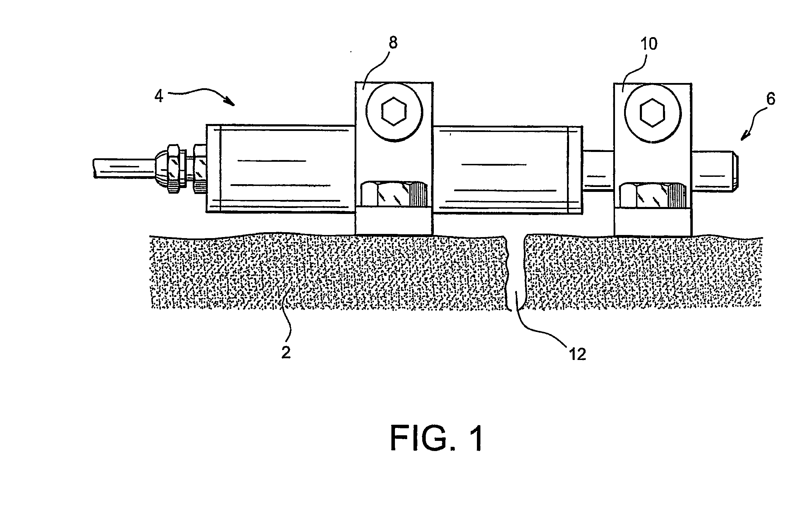

L'extensomètre conforme à l'invention, qui est schématiquement représenté en vue de côté sur la figure 1, est destiné à mesurer les déformations (contractions ou dilatations) d'un matériau hôte, qui dans cet exemple, est un ouvrage d'art en béton.

On voit sur la figure 1 la partie en béton 2 de cet ouvrage dont on veut étudier les déformations au moyen de cet extensomètre.

On décrira de façon détaillée cet extensomètre par la suite mais on indique dès à présent qu'il comporte une première partie 4, appelée « partie fixe », et une deuxième partie 6, appelée « partie mobile », qui est apte à se déplacer par rapport à la partie fixe lors d'une déformation du matériau hôte.

Les parties 4 et 6 sont rendues respectivement rigidement solidaires du matériau hôte par des moyens appropriés 8 et 10. Dans l'exemple, ces moyens 8 et 10 sont des moyens d'ancrage, permettant de fixer les parties 4 et 6 à la surface de la partie en béton 2.

On voit qu'une fissure 12 s'est formée dans le béton, entre les points d'ancrage des parties 4 et 6 de l'extensomètre, de sorte que la partie mobile s'est éloignée de la partie fixe, généralement de quelques millimètres.

L'extensomètre conforme à l'invention permet de mettre en évidence et même de mesurer un tel déplacement, et donc la taille de la fissure 12.

Comme on le verra de façon plus détaillée par la suite, cet extensomètre comporte, pour ce faire, des moyens mécaniques permettant de transformer le déplacement de la partie mobile 6, qui peut être de l'ordre de quelques millimètres, en la flexion d'au moins un corps d'épreuve flexible.

Ce dernier est de préférence une lame flexible dont une extrémité est fixée dans la partie fixe 4. La flexion de cette lame varie en fonction de la position de la partie mobile 6 par rapport à la partie fixe 4.

Cet extensomètre comprend aussi au moins un réseau de Bragg formé par photo-inscription dans le coeur d'une fibre optique de préférence monomode, par exemple en silice. Ce réseau ou plus précisément, la portion de fibre dans laquelle il est formé, est fixée, par exemple collée, sur la lame flexible.

Toute déformation du béton est transmise au réseau de Bragg par l'intermédiaire de la lame flexible. Ce réseau de Bragg modifie alors la lumière qu'il reçoit de moyens de mesure appropriés.

Cette lumière retourne aux moyens de mesure par l'intermédiaire de la fibre optique et la déformation du béton est déterminée par ces moyens de mesure à partir de la lumière ainsi modifiée.

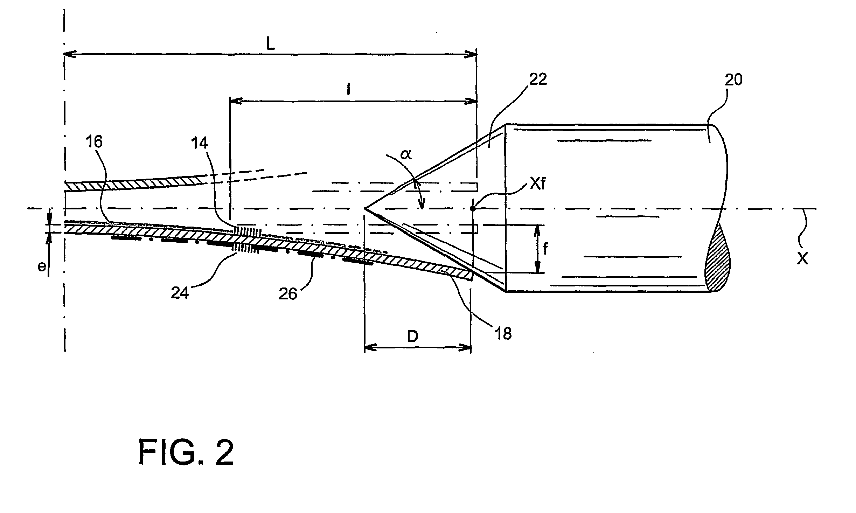

Le principe de cet extensomètre est schématiquement illustré par la figure 2 et consiste donc à fixer un réseau de Bragg de mesure 14 (photo-inscrit dans une fibre optique 16) sur lame flexible 18 montée dans un banc de contrainte. Le déplacement à mesurer D est transmis à l'aide d'une tige 20 munie d'une pointe 22 permettant de démultiplier ce déplacement à mesurer.

Pour des raisons de simplicité de traitement des mesures, le banc de flexion peut avantageusement présenter une réponse linéaire en fonction de la flèche (« deflection ») exercée, notée f. Ce banc de flexion peut être de deux types, soit un banc de flexion à quatre points, soit une lame encastrée en flexion.

Le cas que nous allons traiter en détail est celui d'une lame encastrée en flexion comme on le voit sur la figure 2.

Le choix d'une lame encastrée en flexion se justifie par le fait que l'allongement relatif ε du réseau de Bragg est une fonction linéaire de la flèche f, telle que :

$$\varepsilon = \frac{3el}{2L^3} f$$

avec :

ε : allongement relatif du réseau de Bragg,
e : épaisseur de la lame.
l : distance entre le point d'application de la contrainte et le réseau de Bragg,
L : distance entre l'application de la contrainte et l'encastrement,
f : flèche appliquée en l'abscisse x=L (comptée sur l'axe X, parallèle à la lame non fléchie).

Des essais faits avec un réseau de Bragg inséré dans une plaque de matériau composite ont permis de montrer que la réponse d'un tel système suit correctement cette loi.

En utilisant cette loi, on peut définir un banc de flexion qui permet de mesurer des déplacements supérieurs à la limite élastique de la silice.

A titre purement indicatif et nullement limitatif, on peut utiliser les valeurs suivantes :

L=150mm,
distance du réseau de Bragg au point d'application de la contrainte (point d'abscisse Xf sur l'axe X parallèle à la lame non fléchie) : 100mm

e=4mm, réseau collé en surface,
déplacement à mesurer : 0 à 50mm,
tangente du demi-angle au sommet $\alpha$ de la pointe=0,25.

L'allongement relatif en un point d'une lame encastrée est linéaire en fonction de la flèche si cette dernière est appliquée à la même abscisse notée Xf. Or, dans le cas de l'extensomètre, le point d'application varie avec le déplacement de la pointe. Il faut donc estimer l'erreur de linéarité du système.

Compte tenu de l'équation de la déformée d'un tel système, on a :

$$y = -\frac{1}{2}\frac{f}{L^3}(x^3 - 3L^2 x + 2L^3)$$

avec :

y : déformée de la lame,
L : distance entre l'application de la contrainte et l'encastrement,
f : flèche appliquée en x=L.

Il est possible de calculer le point d'application de la flèche, en connaissant la longueur de la lame fléchie, à l'aide de la relation suivante :

$$L = \int_0^x \sqrt{1+y'^2}\, dx \quad \text{soit} \quad L = \int_0^x \sqrt{1+\left(\frac{1}{2}\frac{f}{L^3}(3x^2 - 3L^2)\right)^2}\quad dx$$

L'erreur d'application de la flèche induit une erreur de linéarité que l'on peut quantifier.

A titre purement indicatif et nullement limitatif, prenons encore les valeurs choisies préalablement pour la lame :

Longueur L=150mm,
Distance du réseau de Bragg à Xf=100mm,
Epaisseur e=4mm, réseau collé en surface,
Déplacement à mesurer 0 à 50mm,
Tangente du demi-angle au sommet $\alpha$ de la pointe=0,25.

On trouve que l'erreur est inférieure à 1%. Elle peut être corrigée mathématiquement.

Considérons maintenant le problème de la déformation spectrale du réseau de Bragg et, plus précisément, l'influence d'un gradient d'allongement relatif de ce réseau.

La déformation de la lame est linéaire en fonction de la distance entre le point d'application de la contrainte et le réseau de Bragg. Or, le réseau n'étant pas ponctuel (il a quelques mm de long), il est soumis de ce fait à une déformation variable sur sa longueur et sa réponse spectrale est alors élargie. Il mesure un gradient de déformation qui le « chirpe ».

Ce gradient étant linéaire, la déformation spectrale du réseau de Bragg est symétrique. L'allongement relatif étant mesuré à l'aide du déplacement spectral du sommet du pic de Bragg, celui-ci donne l'information de la déformation au centre du réseau. A l'aide d'un logiciel permettant de modéliser un réseau de Bragg en fonction de ses paramètres d'inscription, il est possible de déterminer l'effet d'un tel gradient de déformation sur le pas A du réseau et sur son spectre.

Considérons, à titre d'exemple, un réseau de Bragg de 5mm de long, inscrit à 1500nm, « chirpé » par un gradient d'allongement relatif de 1000$\mu\varepsilon$.

Au repos, la longueur d'onde de Bragg du réseau vaut 1500,17nm et la largeur spectrale de ce réseau vaut 0,2448nm à mi-hauteur, puis une fois soumis à l'allongement, cette largeur passe à 1,12nm à mi-hauteur et la longueur d'onde de Bragg passe à 1500, 90nm. La mesure du minimum de transmission n'est plus pertinente mais la longueur d'onde centrale du réseau de Bragg est représentative de la déformation en son centre, soit 500$\mu\varepsilon$.

Dans le cas d'un réseau collé sur une lame, le gradient d'allongement est plus faible et son influence sur le spectre est moins sensible . L'exemple qui suit illustre le cas extrême de « chirp » où le réseau est collé sur la partie de la lame soumise au plus fort gradient d'allongement.

Dans cet exemple, on utilise les valeurs suivante pour la lame :

- longueur L=150mm,

- distance réseau de Bragg à Xf=147,5mm,
- épaisseur e=4mm, réseau collé en surface,
- déplacement à mesurer 0 à 50mm,
- tangente du demi-angle au sommet $\alpha$ de la pointe=0,8.

Pour un déplacement de 50mm, la longueur d'onde de Bragg devient 1515,8655nm et la largeur spectrale à mi-hauteur devient égale à 0,4344nm.

On trouve que l'allongement de la réponse spectrale du réseau de Bragg est visible dans la partie haute du spectre mais ne déforme pas le sommet. Ainsi, avec ce type de capteur, on peut utiliser les réseaux de Bragg sans tenir compte du gradient d'allongement. C'est là l'un des avantages déterminants de l'invention.

On peut calculer l'incertitude relative de l'étalonnage de l'extensomètre conforme à l'invention en utilisant la détermination théorique de l'allongement relatif. On obtient :

$$\frac{\delta\varepsilon}{\varepsilon} = \frac{\delta\varepsilon}{e} + \frac{\delta l}{l} + \frac{3\delta L}{L}$$

avec :

$\delta\varepsilon$ : incertitude sur l'allongement relatif

$\delta e$ : incertitude sur l'épaisseur de la lame (mesurée avec un pied à coulisse) : 0,01mm

$\delta l$ : incertitude sur l'emplacement du réseau de Bragg (en utilisant une méthode thermique de repérage) : 1mm

$\delta L$ : incertitude sur la longueur de la lame (mesurée avec un pied à coulisse) : 0,01mm.

A titre d'exemple, on choisit :

- longueur L=150mm $\pm$ 0,01mm
- distance réseau de Bragg à Xf=100mm $\pm$ 1mm
- épaisseur e = 4mm, réseau collé en surface $\pm$0,01mm
- déplacement à mesurer 0 à 50mm
- tangente du demi-angle au sommet $\alpha$ de la pointe=0,25

On obtient :

$$\frac{\delta\varepsilon}{\varepsilon} = \pm 1,27\%$$

On constate que l'incertitude est surtout liée au positionnement du réseau de Bragg.

Considérons maintenant la compensation de l'effet de la température sur le réseau de Bragg 14.

Pour compenser cet effet de la température sur ce réseau de Bragg 14, nous utilisons un autre réseau de Bragg 24 qui est collé symétriquement sur l'autre face de la lame 18 et qui subit un allongement relatif égal mais de signe opposé à celui du réseau 14. Ceci suppose que les réseaux 14 et 24 soient implantés dans des plans confondus ou parallèles, en deux endroits où le rayon de courbure de la lame sous l'effet du déplacement à mesurer D est le même, comme sur la figure 2.

Si le corps d'épreuve n'est pas une lame isoflexion, ces réseaux sont nécessairement en regard l'un de l'autre sur les deux faces de la lame.

Si le corps d'épreuve est une lame isoflexion, c'est-à-dire une lame pour laquelle la contrainte de flexion est la même dans toutes les sections de la zone utile, comme c'est par exemple le cas d'une lame triangulaire suivant le mode de réalisation préféré, ces réseaux ne sont pas nécessairement en regard l'un de l'autre sur les deux faces de la lame.

Par « zone utile », on entend la lame moins les extrémités de celle-ci qui sont en amont et en aval de la portion de fibre optique fixée, c'est-à-dire moins l'extrémité encastrée et l'extrémité opposée, en contact avec la pointe 22.

Le réseau 24 est formé dans une fibre optique 26 qui, pour simplifier, peut être la fibre 16.

Les deux réseaux 14 et 24, qui sont équidistants d'une même extrémité de la lame 18 dans l'exemple représenté, ont des longueurs d'onde de Bragg différentes : ces dernières valent respectivement 1262nm et 1266nm pour les réseaux 14 et 24 dans l'exemple décrit.

L'utilisation des deux réseaux ainsi positionnés conduit à une auto-compensation de l'effet de température.

Les deux réseaux sont en effet choisis de façon à obéir à la même loi :

$$\frac{\Delta\lambda B}{\lambda B} = a\varepsilon + b\Delta T$$

où $\frac{\Delta\lambda B}{\lambda B}$ est la variation relative de la longueur d'onde de Bragg, $\varepsilon$ est l'allongement relatif du réseau et $\Delta T$ la variation de température. Le résultat de la mesure effectuée avec les deux réseaux est ainsi :

$$a\ (\varepsilon)+b\Delta T-(a(-\varepsilon)+b\Delta T)=2a\varepsilon$$

puisque ces deux réseaux ont des allongements relatifs respectivement égaux à $\varepsilon$ et $-\varepsilon$.

L'incertitude relative de l'étalonnage d'un tel dispositif est le double de celle d'un système à un seul réseau et présente des difficultés de montage, les deux réseaux devant se trouver à la même distance de l'application de la flèche. Il faut donc rechercher une configuration dans laquelle l'allongement relatif soit indépendant de l'emplacement du réseau. Un tel dispositif est décrit ci-après.

Il s'agit d'une lame encastrée d'égale contrainte.

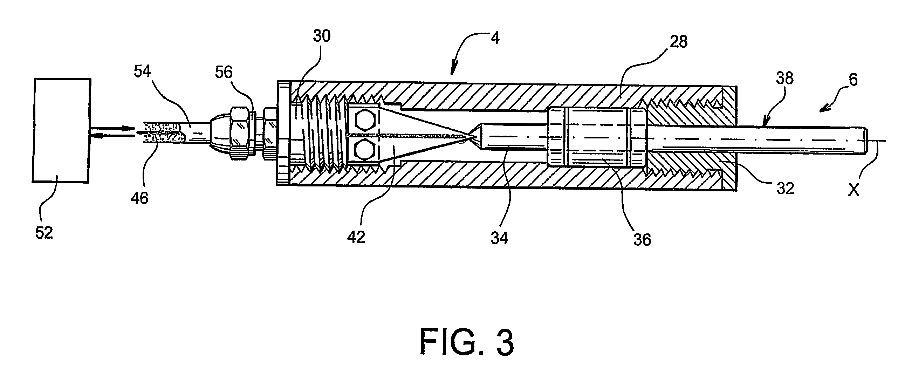

Comme nous l'avons vu, la variable 1 (distance du réseau de Bragg à Xf) est un paramètre important de la modélisation qui peut être cause d'erreur sur l'étalonnage de l'extensomètre. Une lame de profil triangulaire, que l'on voit sur la figure 3, permet de s'affranchir de cette variable.

En effet, l'équation de la déformée d'une telle lame est une portion d'arc de cercle. Le rayon étant constant, la contrainte et l'allongement relatif le long d'une telle lame sont constants. Des mesures effectuées sur une lame ayant cette géométrie ont permis de vérifier la théorie.

A titre purement indicatif et nullement limitatif les conditions de mesure sont les suivantes :

longueur de la lame triangulaire L=190mm, épaisseur de cette lame e=3mm,
base du triangle formé par cette lame =40mm,
flèche f = 29,6mm,
rayon = 578mm.

L'allongement relatif longitudinal $\varepsilon$ en tout point de la lame triangulaire s'exprime de la manière suivante :

$$\varepsilon = \frac{e}{L^2} f$$

L'incertitude relative de l'étalonnage vaut ainsi :

$$\frac{\delta\varepsilon}{\varepsilon} = \frac{\delta e}{e} + \frac{2\delta L}{L}$$

avec :

$\delta\varepsilon$ : incertitude sur l'allongement relatif,
$\delta e$ : incertitude sur l'épaisseur de la lame = 0,01mm
$\delta L$ : incertitude sur la longueur de la lame = 0,01mm.

A titre purement indicatif et nullement limitatif, on donne ci-après un exemple d'application numérique :

Longueur L = 150mm $\pm$ 0,01mm,
Epaisseur de la lame = 4mm, réseau collé en surface $\pm$ 0,01mm,

Déplacement à mesurer 0 à 50mm,
Tangente du demi-angle au sommet $\alpha$ de la pointe = 0,25.

On a ainsi :

$$\frac{\delta \varepsilon}{\varepsilon} = \pm 0,26\%$$

On constate que l'incertitude sur l'étalonnage d'un tel système, pourvu de deux réseaux de Bragg pour compenser l'effet de la température, est de l'ordre de $\pm$ 0,5%.
Considérons maintenant la correction de l'erreur de linéarité dans le cas d'une lame de forme triangulaire.
Comme nous l'avons vu, le modèle mathématique utilisé comporte une erreur de linéarité due au déplacement du point de contact avec la lame. Il est possible de corriger cette erreur en connaissant le point d'application de la force exercée par la pointe sur la lame.
L'allongement relatif en un point d'une lame encastrée est linéaire en fonction de la flèche si cette dernière est appliquée à la même abscisse encore notée Xf. Dans le cas considéré, le point d'application varie avec le déplacement de la pointe. Il faut donc estimer l'erreur de linéarité du système.
On connaît l'équation de la déformée d'une telle lame triangulaire :

$$y = \frac{f}{L^2} x^2 - 2\frac{f}{L} x + f$$

avec :

y : déformée de la lame,
L : distance entre l'application de la contrainte et l'encastrement,
F : flèche appliquée en l'abscisse x=L.

Il est possible de calculer le point d'application de la flèche en connaissant la longueur de la lame fléchie, à l'aide de la relation suivante :

$$\text{L} = \int_0^x \sqrt{1 + y'^2} \ \ \text{dx soit} \ \ \text{L} = \int_0^x \sqrt{1 + \left(\frac{1}{2}\frac{f}{L^3}(3x^2 - 3L^2)\right)^2} \ \ \text{dx}$$

L'erreur d'application de la flèche induit une erreur de linéarité que l'on peut quantifier. A titre purement indicatif, on choisit la lame définie précédemment :

Longueur L = 150mm,
Distance du réseau de Bragg à Xf = 100mm,
Epaisseur de la lame = 4mm, réseau collé en surface,
Déplacement à mesurer 0 à 50mm,
Tangente du demi-angle au sommet $\alpha$ de la pointe = 0,25.

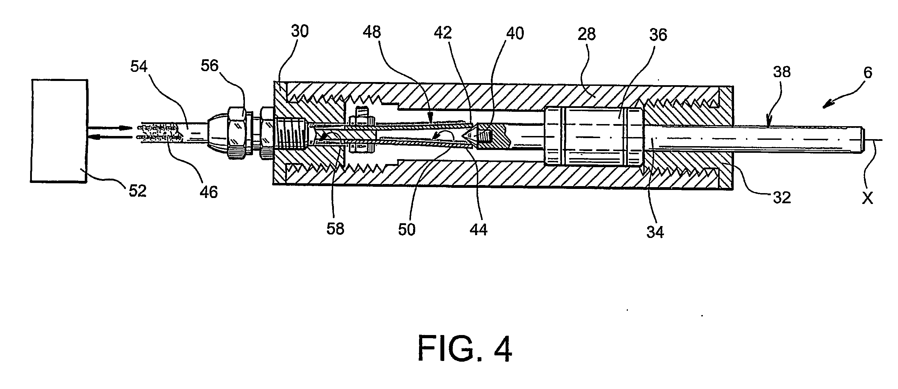

L'erreur obtenue est supérieure à celle d'une lame rectangulaire, considérée plus haut, mais reste inférieure à 1%. Elle peut être corrigée mathématiquement.
On décrit maintenant un mode de réalisation particulier de l'extensomètre objet de l'invention, en faisant référence aux figures 3 et 4. Sur la figure 3 (respectivement 4), l'exemple de l'invention est vu en coupe schématique de dessus (respectivement de côté). Cet exemple correspond à la vue de profil de la figure 1.
Sur les figures 3 et 4, on retrouve la partie fixe 4 et la partie mobile 6.
La partie fixe 4 comprend un tube ou capot 28 qui est fermé par deux bouchons 30 et 32.
Pour faciliter l'installation de l'extensomètre, ce tube 28 est cylindrique et l'on note alors X l'axe de ce tube.
La partie mobile 6 comprend une tige 34 qui est déplaçable en translation dans le tube 28 suivant l'axe X, à travers le bouchon 32. Pour obtenir une bonne translation de la tige 34, cette dernière coulisse dans une douille à billes 36 prévue dans le tube 28, à la suite du bouchon 32.

Une extrémité 38 de la tige 34 demeure à l'extérieur du tube 28 et cette extrémité 38 est rendue rigidement solidaire d'un matériau hôte lorsqu'on veut mesurer les déformations de ce dernier (figure 1).

A l'autre extrémité de la tige 34 est fixée une pointe 40 qui est interchangeable, en fonction de la gamme de mesure choisie.

A titre d'exemple, le diamètre de la tige 34 vaut 5mm et la somme des tolérances sur cette tige et le logement de celle-ci dans le tube 28 vaut $\pm$ 12$\mu$m, d'où un débattement de $\pm$ 18$\mu$m au bout de la pointe 40. Une telle erreur est corrigible d'une manière identique à celle qui est utilisée pour compenser l'effet de la température.

Pour des raisons de symétrie et afin d'éviter un gauchissement des moyens permettant la translation de la tige, l'extensomètre des figures 3 et 4 comporte, dans le tube 28, deux lames identiques 42 et 44 qui sont fixées au bouchon 30 et sont symétriques l'une de l'autre par rapport à l'axe X.

Ces lames sont triangulaires pour les raisons mentionnées plus haut.

La pointe 40 est prévue pour provoquer la flexion de ces lames, cette flexion variant lors de la déformation du matériau hôte. Dans l'exemple représenté, cette flexion conduit à rendre convexes les faces des lames 42 et 44, qui sont tournées l'une vers l'autre, et concaves les autres faces de ces lames.

L'extensomètre des figures 3 et 4 est muni d'une fibre optique 46 dans laquelle sont formés deux réseaux de Bragg dont les longueurs d'onde de Bragg sont différentes.

Les portions de fibre désignées par les flèches 48 et 50, où se trouvent respectivement ces réseaux, sont respectivement collées sur la face concave de la lame 42 (dont s'écarte latéralement la portion correspondante, avant l'extrémité de cette lame, en faisant une boucle) et sur la face devenant convexe de la lame 44.

Dans ce cas où la lame est choisie isoflexion, il va de soi que la colle doit être apliquée de manière uniforme sur cette lame, de manière à ne pas détruire ou altérer cette caractéristique d'isoflexion.

Comme on le voit sur les figures 3 et 4, la fibre optique, dont une extrémité est optiquement couplée à un système de mesure 52, passe sucessivement dans un câble protecteur 54, à travers un presse-étoupe 56, à travers un perçage central 58 dont est pourvu le bouchon 30, sur la lame 42 puis sur la lame 44 en faisant une boucle, puis repasse à travers le bouchon 30, à travers le presse-étoupe puis dans le câble et l'autre extrémité de la fibre optiquement couplée au système de mesure.

Dans l'exemple des figures 3 et 4, l'ensemble formé par le système et l'extensomètre fonctionne par transmission : la lumière, qui est émise par une source lumineuse (non représentée) contenue dans le système, se propage d'une extrémité à l'autre de la fibre pour retourner dans le système après avoir interagi avec les réseaux de Bragg.

Elle est ensuite analysée par des moyens appropriés connus, permettant la détermination de la déformation du matériau-hôte.

Selon diverses variantes non représentées de l'exemple que l'on vient de décrire en faisant référence aux figures 3 et 4 :

- les deux réseaux de Bragg peuvent être fixés, l'un au dessus de l'autre, sur l'une des deux lames, l'un sur la face convexe de celle-ci et l'autre sur la face concave ;
- dans l'extensomètre, on peut prévoir un seul réseau de Bragg et fixer alors celui-ci sur l'une des deux lames ;
- dans l'extensomètre, on peut prévoir une seule lame et deux réseaux de Bragg et fixer ces deux réseaux de Bragg l'un au dessus de l'autre, sur cette lame, l'un sur la face convexe de celle-ci et l'autre sur la face concave ;
- dans l'extensomètre, on peut prévoir une seule lame et un seul réseau de Bragg et fixer alors celui-ci sur la lame.

En outre, dans l'exemple et toutes les variantes ci-dessus de celui-ci, le système de mesure peut être conçu pour « interroger » le ou les réseaux de Bragg dans les deux sens, et donc envoyer la lumière de la source dans l'une quelconque des deux extrémités de la fibre puis récupérer ensuite, à l'autre extrémité, la lumière ayant interagi avec ce ou ces réseaux pour analyser cette lumière.

De plus, on peut utiliser un ensemble système de mesure - extensomètre qui fonctionne par réflexion au lieu de fonctionner par transmission. Dans ce cas, une seule extrémité de la fibre optique est optiquement couplée au système de mesure, la lumière de la source est envoyée au(x) réseau(x) par cette extrémité et l'on récupère, en cette même extrémité, la lumière ayant interagi avec ce ou ces réseaux. Alors, l'autre extrémité de la fibre reste dans le tube 28, sans être connectée.

**Revendications**

1. Extensomètre destiné à mesureur les déformations d'un matériau hôte (2), cet extensomètre comprenant une première pièce (4), une seconde pièce (6) apte à.se déplacer dans la première pièce, au moins un corps d'épreuve (18 ; 42, 44) et au moins un réseau de Bragg (14), ce réseau de Bragg étant formé dans une fibre optique (16, 26 ; 46) qui est rendue solidaire du corps d'épreuve, tout déplacement de la seconde pièce relativement à la première pièce étant transmis à ce réseau de Bragg par l'intermédiaire du corps d'épreuve, l'extensomètre étant **caractérisé en ce que** le corps d'épreuve est une lame flexible linéairement déformable en flexion, tout en restant dans son domaine de déformation élastique, une extrémité de cette lame étant fixée à la première pièce (4) de l'extensomètre et l'autre extrémité de cette lame étant en contact, de façon tangentielle, avec un mécanisme de démultiplication (20, 22, 34, 40) relié à la seconde pièce (6) et permettant de transformer le déplacement relatif entre les pièces (4, 6) en une variation de flexion du corps d'épreuve, cette variation de flexion induisant une déformation du réseau de Bragg.

2. Extensomètre selon la revendication 1, dans lequel le mécanisme de démultiplication comprend une tige (20 ; 34) prévue pour coulisser dans la première pièce (4) et terminée par une pointe (22 ; 40) prévue pour rester en contact, de façon tangentielle, avec l'extrémité sous flexion contrainte de la lame flexible, et provoquer la variation de flexion du corps d'épreuve lors du déplacement relatif entre les première et seconde pièces (4, 6).

3. Extensomètre selon la revendication 2, dans lequel la pointe a un demi-angle au sommet dont la tangente vaut 0,25 ou 0,8.

4. Extensomètre selon l'une quelconque des revendications 1 à 3, dans lequel le corps d'épreuve est une lame flexible (18 ; 42, 44) qui travaille dans son domaine linéaire d'élasticité et sur laquelle est collé, dans le plan où s'exerce la flexion, la fibre comportent le réseau de Bragg, ce collage étant homogène de manière à minimiser les irrégularités induites sur la courbure de la lame.

5. Extensomètre selon la revendication 4, dans lequel la lame (42, 44) est isocontrainte en flexion.

6. Extensomètre selon la revendication 5, dans lequel la lame (42, 44) a une épaisseur constante et une forme de triangle isocèle.

7. Extensomètre selon l'une quelconque des revendications 1 à 3, comprenant deux corps d'épreuve respectivement constitués de première et deuxième lames flexibles (42, 44), ces lames flexibles étant placées l'une en face de l'autre et prévues pour être simultanément fléchies lors d'une déformation du matériau hôte.

8. Extensomètre selon l'une quelconque des revendications 4 à 6, comprenant un autre réseau de Bragg (24), fixé sur l'autre face de la lame fléxible, à un endroit de même courbure, et prévu pour la compensation d'effets thermiques, susceptibles d'affecter ledit réseau de Bragg (14), ce dernier et ledit autre réseau ayant des longueurs d'onde de Bragg différentes.

9. Extensomètre selon la revendication 7, comprenant deux réseaux de Bragg dont les longueurs d'onde de Bragg respectives sont différentes, l'un des réseaux de Bragg étant fixé sur une face de la première lame flexible (42), face qui est rendue concave par la flexion, l'autre réseau de Bragg étant fixé sur une face de la deuxième lame flexible (44), face qui est rendue convexe par la flexion.

**Claims**

1. Extensometer intended to measure the deformations of a host material (2), this extensometer comprising a first part (4), a second part (6) able to move within the first part, at least one test specimen (18 ; 42, 44) and at least one Bragg grating (14), this Bragg grating being formed in an optic fibre (16, 26 ; 46) which is made integral with the test specimen, any displacement of the second part with respect to the first part being transmitted to this Bragg grating via the test specimen, the extensometer being **characterized in that** the test specimen is a flexible plate which can undergo linear bending deformations, while remaining within its range of elastic deformation, one end of this blade being fixed to the first part (4) of the extensometer and the other end of this blade being tangentially in contact with a stepping down mechanism (20, 22, 34, 40) which is connected with the second part and makes it possible to transform the relative displacement between the parts (4, 6) into a bending variation of the test specimen, this bending variation inducing a deformation of the Bragg grating.

**2.** Extensometer as in claim 1, wherein the stepping down mechanism comprises a rod (20 ; 34) designed to slide within the first part (4) and ending in a tip (22 ; 40) designed to remain tangentially in contact with the bent-by-stress end of the flexible plate and to cause a bending variation of the test specimen when the first and second parts (4, 6) are moved with respect to each other.

**3.** Extensometer as in claim 2, wherein the tip has an apex semi-angle the tangent of which is equal to 0,25 or 0,8.

**4.** Extensometer as in any of claims 1 to 3, wherein the test specimen is a flexible plate (18 ; 42, 44) working within its linear range elasticity and on which, in the plane in which flexion is exerted, the fibre comprising the Bragg grating is bonded, this bonding being homogeneous in order to minimise irregularities induced on the curvature of the plate.

**5.** Extensometer as in claim 4, wherein the plate (42, 44) is iso-stressed in flexion.

**6.** Extensometer as in claim 5, wherein the plate (42, 44) is of constant thickness and is of isosceles triangle shape.

**7.** Extensometer as in any of claims 1 to 3, comprising two test specimens respectively consisting of first and second flexible plates (42, 44), these flexible plates being positioned one facing the other and designed to undergo simultaneous deflection during deformation of the host material.

**8.** Extensometer as in any of claims 4 to 6, comprising another Bragg grating (24), fixed to the other face of the flexible plate, at a point of similar curvature, and designed to compensate thermal effects likely to affect said Bragg grating (14), the latter and said other grating having different Bragg wavelengths.

**9.** Extensometer as in claim 7, comprising two Bragg gratings whose respective Bragg wavelengths are different, one of the Bragg gratings being fixed on one face of the first flexible plate (42), a face made concave by bending, the other Bragg grating being fixed on a face of the second flexible plate (44), a face made convex by bending.

**Patentansprüche**

**1.** Extensometer, bestimmt zur Messung der Verformungen eines Gast- bzw. Wirtsmaterials (2), wobei dieses Extensometer einen ersten Teil (4), einen in dem ersten Teil verschiebbaren zweiten Teil (6), wenigstens einen Probenkörper (18 ; 42, 44) und wenigstens ein Bragg-Gitter (14) umfasst, wobei dieses Bragg-Gitter in einer optischen Faser (18, 26 ; 46) ausgebildet ist, die fest mit dem Probenkörper verbunden ist, so dass jede Verschiebung des zweiten Teils relativ zum ersten Teil durch den Probenkörper auf dieses Bragg-Gitter übertragen wird,
**dadurch gekennzeichnet, dass** der Probenkörper eine flexible Lamelle ist, die linear biegeverformbar ist und dabei innerhalb ihres elastischen Verformungsbereichs bleibt, wobei ein Ende dieser Lamelle an dem ersten Teil (4) des Extensometers befestigt ist und das andere Ende dieser Lamelle auf tangentiale Weise Kontakt hat mit einem Untersetzungsmechanismus (20, 22, 34, 40), der mit dem zweiten Teil (6) verbunden ist und ermöglicht, die Relativverschiebung zwischen den Teilen (4, 6) umzuwandeln in eine Biegungsänderung des Probenkörpers, wobei diese Biegungsänderung eine Verformung des Bragg-Gitters induziert.

**2.** Extensometer nach Anspruch 1, bei dem der Untersetzungsmechanismus eine Stange (20 ; 84) umfasst, die in dem ersten Teil (4) verschoben werden kann und mit einer Spitze (22 ; 40) endet, die vorgesehen ist, auf tangentiale Weise mit der einer Biegespannung ausgesetzten Lamelle in Kontakt zu bleiben und die Biegungsänderung des Probenkörpers bei der zwischen dem ersten und zweiten Teil (4, 6) stattfindenden Relativverschiebung zu bewirken.

**3.** Extensometer nach Anspruch 2, bei dem die Spitze einen halben Öffnungswinkel hat, dessen Tangente 0,25 oder 0,8 beträgt.

**4.** Extensometer nach einem der Ansprüche 1 bis 3, bei dem der Probenkörper eine flexible Lamelle (18 ; 42, 44) ist, die in ihrem linearen Elastizitätsbereich arbeitet und auf die in der Ebene, in der die Biegung stattfindet, die das Bragg-Gitter enthaltende Faser geklebt ist, wobei diese Klebung homogen ist, um die in der Krümmung der Lamelle induzierten Irregularitäten zu minimieren.

**5.** Extensometer nach Anspruch 4, bei dem die Lamelle (42, 44) isometrisch biegebelastet wird.

**6.** Extensometer nach Anspruch 5, bei dem die Lamelle (42, 44) eine konstante Dicke und die Form eines gleichschenkligen Dreiecks hat.

7. Extensometer nach einem der Ansprüche 1 bis 3 mit zwei Probenkörpern, jeweils gebildet durch erste und zweite flexible Lamellen (42, 44), wobei sich diese flexiblen Lamellen gegenüberstehen und vorgesehen sind, sich bei einer Verformung des Gast- bzw. Wirtsmaterials simultan zu biegen.

8. Extensometer nach einem der Ansprüche 4 bis 6, ein anderes bzw. weiteres Bragg-Gitter umfassend, fixiert auf der anderen Seite der flexiblen Lamelle, an einer Stelle von gleicher Krümmung und vorgesehen zur Kompensierung von thermischen Effekten, die auf das genannte Bragg-Gitter (14) einwirken können, wobei dieses letztere und das genannte andere Gitter unterschiedliche Bragg-Wellenlängen haben.

9. Extensometer nach Anspruch 7 mit zwei Bragg-Gittern, deren jeweiligen Bragg-Wellenlängen unterschiedlich sind, wobei eines der Bragg-Gitter auf einer Seite, nämlich der durch die Biegung konkav gemachten Seite der ersten flexiblen Lamelle (42) fixiert ist, und das andere Bragg-Gitter auf einer Seite der zweiten flexiblen Lamelle (44), nämlich der durch die Biegung konvex gemachten Seite fixiert ist.

FIG. 1

FIG. 2

FIG. 3

FIG. 4

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0000806 W
- FR 2823299, V. Dewynter-Marty
- DE 19922102 A
- US 20030012499 A
- FR 2823299 A

**Littérature non-brevet citée dans la description**

- **P. Ferdinand et al.** Mine Operating Accurate STABILity Control with Optical Fiber sensing and Bragg Grating Technology : the BRITE STABILOS project, OSF10, Glasgow (GB). *Journal of Lightwave Technology,* 11 Octobre 1994, vol. 12 (7